# EUROPEAN PATENT APPLICATION

(11) **EP 4 668 647 A1**
(43) Date of publication of application: **24.12.2025**
(21) Application number: 24757083.1
(22) Date of filing: 01.02.2024
(51) Int. Cl.: H04L 5/00, H04L 27/26, H04W 84/12, H04W 72/04

(54) **TRANSMISSION OR RECEPTION METHOD AND DEVICE BASED ON DISTRIBUTED RESOURCE UNIT IN WIRELESS LAN SYSTEM**

(30) Priority: 13.02.2023 KR 20230018949; 03.04.2023 KR 20230043762; 19.04.2023 KR 20230051520
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Plasseraud IP
(86) International application number: PCT/KR2024/001537
(87) International publication number: WO 2024/172353

(57) **Abstract**

A transmission or reception method and device based on a distributed resource unit in a wireless LAN system are disclosed. A method performed by means of a first station (STA) in a wireless local area network (WLAN), according to one embodiment of the present disclosure, may comprise the steps of: transmitting, to one or more second STAs, a first physical layer protocol data unit (PPDU) including a trigger frame, the trigger frame including a first field having one or more bitmaps related to a distributed resource unit (DRU); and receiving, from the one or more second STAs, a second PPDU triggered by the trigger frame. Each of the one or more bitmaps can have a bit size corresponding to the maximum channel size to which the DRU can be applied with respect to the second PPDU.

## Description

### [TECHNICAL FIELD]

The present disclosure relates to a transmission or reception method and device based on a distributed resource unit in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a transmission or reception method and device based on a distributed resource unit in a WLAN system.

The additional technical problem of the present disclosure is to provide a method and a device for signaling whether to apply a distributed resource unit, an application location, etc. in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may include transmitting, to at least one second STA, a first physical layer protocol data unit (PPDU) including a trigger frame, wherein the trigger frame includes a first field including at least one bitmap related to a distributed resource unit (DRU); and receiving a second PPDU triggered by the trigger frame from the at least one second STA. Each of the at least one bitmap may have a bit size corresponding to the maximum channel size to which the DRU may be applied to the second PPDU.

A method performed by a second station (STA) in a wireless local area network (WLAN) system according to an additional aspect of the present disclosure may include receiving, from a first STA, a first physical layer protocol data unit (PPDU) including a trigger frame, wherein the trigger frame includes a first field including at least one bitmap related to a distributed resource unit (DRU); and on a DRU allocated to the second STA based on the at least one bitmap, transmitting a second PPDU triggered by the trigger frame to the first STA. Each of the at least one bitmap may have a bit size corresponding to the maximum channel size to which the DRU may be applied to the second PPDU.

### [Technical Effects]

According to the present disclosure, a transmission or reception method and device based on a distributed resource unit in a WLAN system may be provided.

According to the present disclosure, a method and a device for signaling whether to apply a distributed resource unit, an application location, etc. in a WLAN system may be provided.

Effects achievable by the present disclosure are not limited to the above-described effects, and other effects which are not described herein may be clearly understood by those skilled in the pertinent art from the following description.

### [Brief Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for explaining examples of resource units of a WLAN system to which the present disclosure may be applied.
FIG. 11 is a diagram for describing examples of a DRU to which the present disclosure may be applied.
FIG. 12 is a diagram representing the exemplary format of a trigger frame to which the present disclosure may be applied.
FIG. 13 is a diagram for describing an example of the first STA's DRU-based PPDU reception method according to the present disclosure.
FIG. 14 is a diagram for describing an example of the second STA's DRU-based PPDU transmission method according to the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

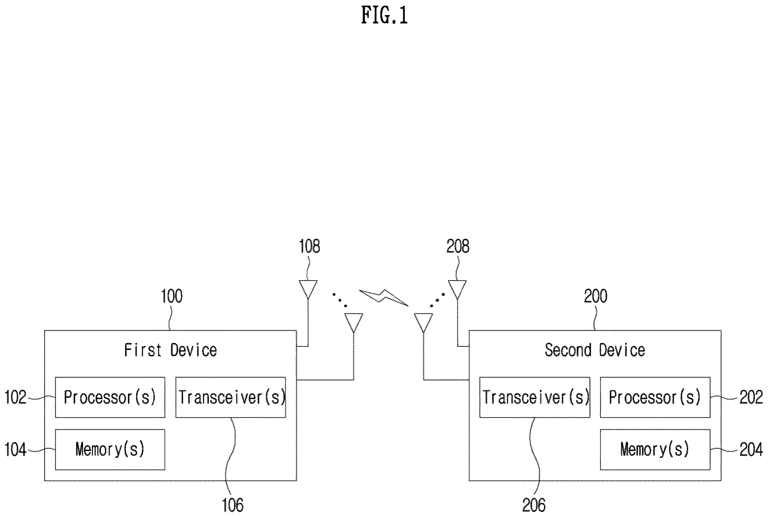

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internetof-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

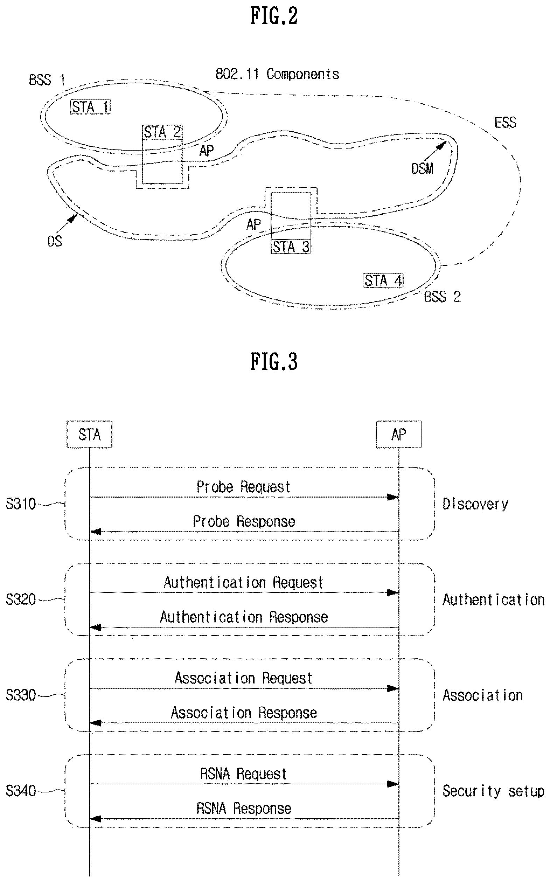

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS 1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

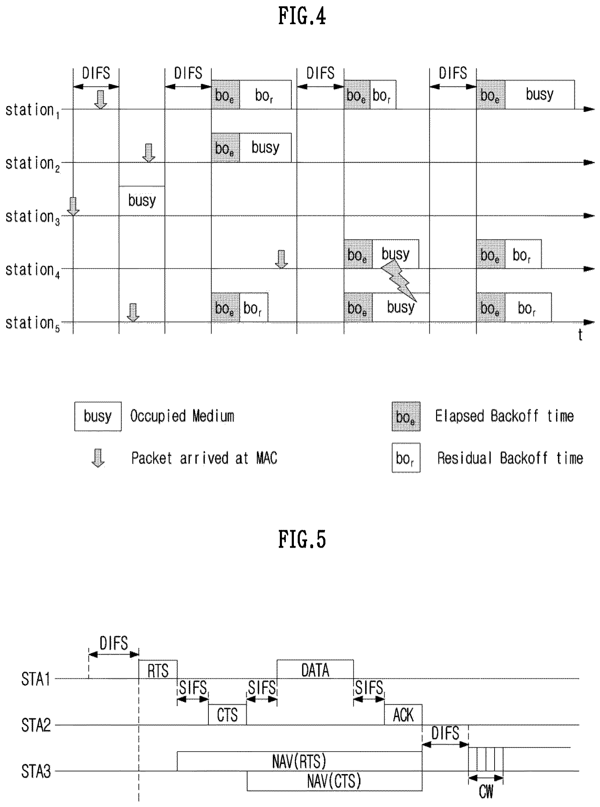

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

**In** the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STAS, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STAS is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STAS. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STAS, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

**In** the example of FIG. 5, it is assumed that a STA1 intends to transmit data to a STA2, and a STA3 is in a position capable of overhearing some or all of frames transmitted and received between the STA1 and the STA2.

**In** order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

**If** the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

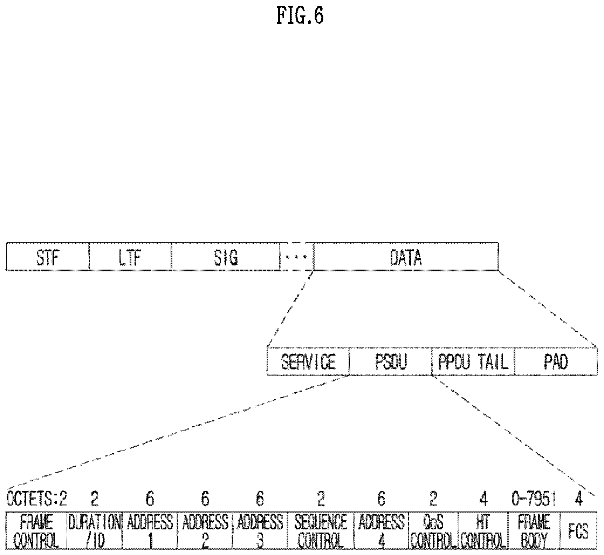

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

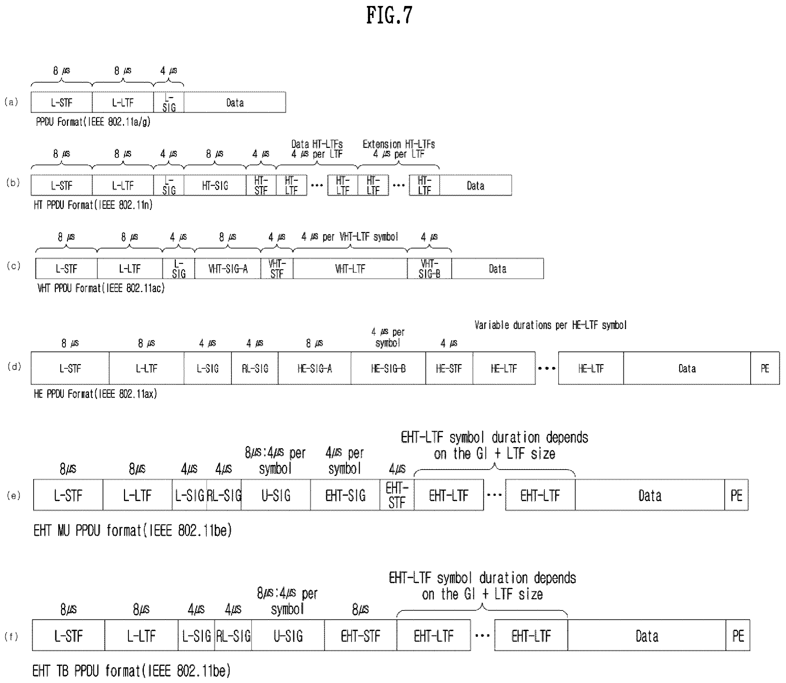

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource Unit

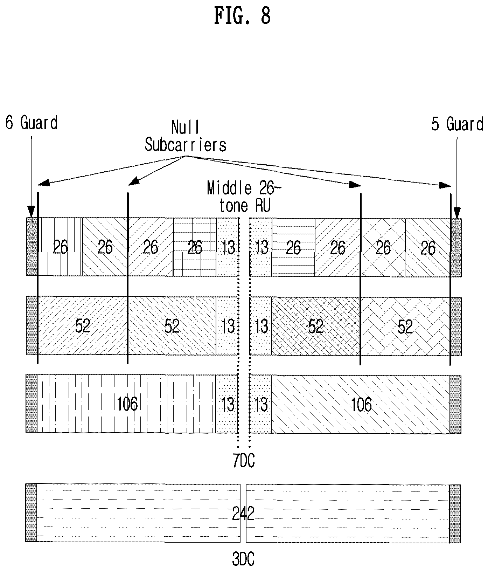

FIGS. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

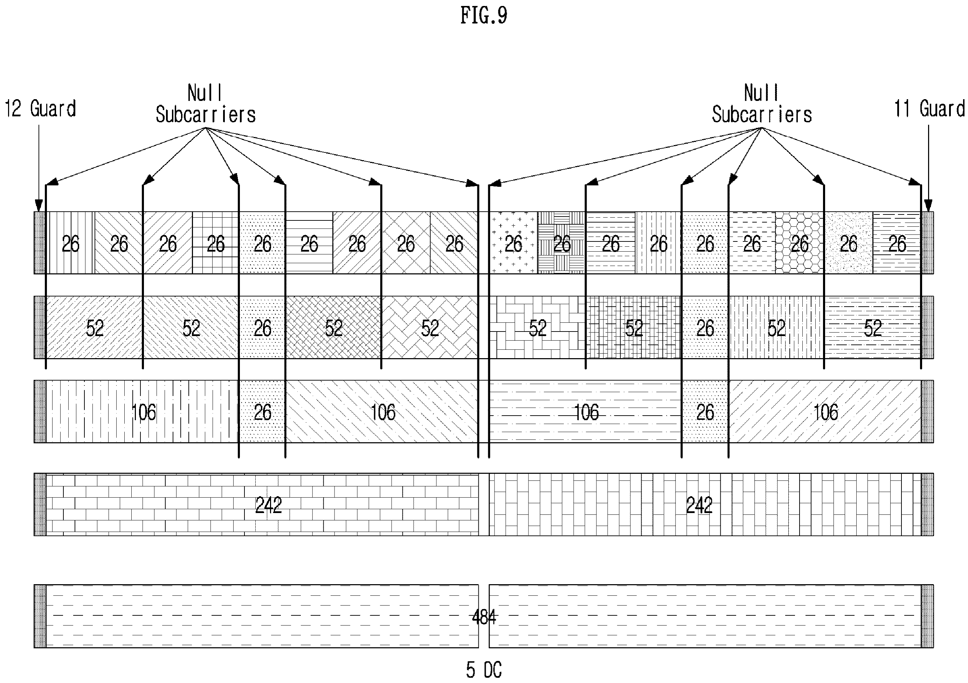

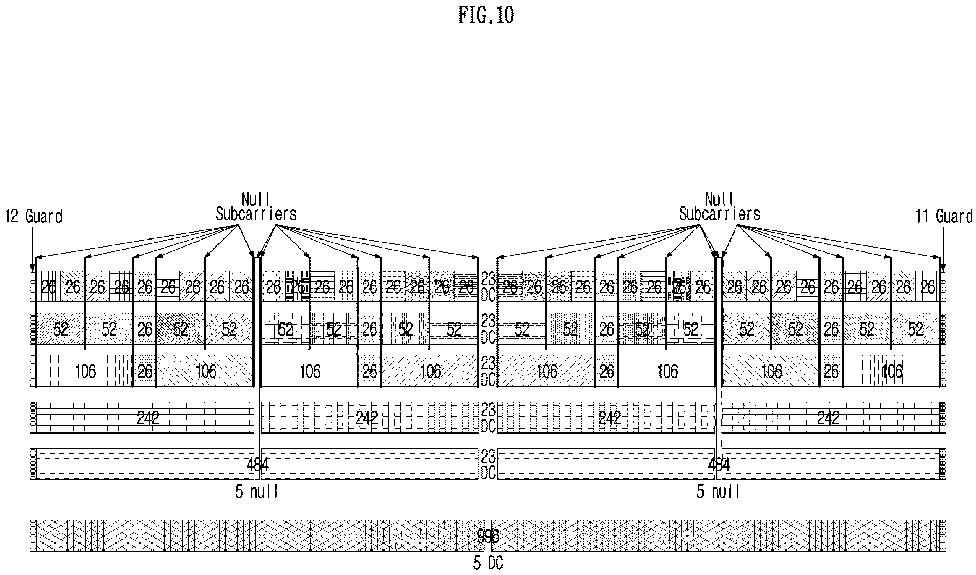

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, a STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. In other words, a transmitting STA (e.g., an AP) may transmit X-STF (e.g., X is HE, EHT, etc.), X-LTF and data fields for a first STA through a first RU and transmit X-STF, X-LTF and Data fields for a second STA through a second RU in one MU PPDU. Information on the arrangement of a RU may be signaled through the X-SIG (e.g., X is HE, EHT, U) field of a X-PPDU format.

### Distributed Resource Unit

The limitations on power spectral density (PSD) may be applied in a sub-7GHz (e.g., 6GHz) band due to regulations in various regions. For a non-AP STA in a low power indoor (LPI) band, a PSD limitation may be -1dBm/MHz. For example, for the existing 52-tone RU, the maximum transmission (Tx) power may be approximately 6dBm.

In addition, different limitations may be applied in a 2.4GHz band and a 5GHz band. For example, in EU/China/Japan/Korea, a PSD limitation of 10dBm/MHz may be applied in a 2.4GHz band. For the existing 52-tone RU, the maximum Tx power may be approximately 17dBm. If a PSD limitation may be avoided in a 5GHz band, transmission power may be increased. For example, the maximum transmission power is 24dBm for the existing 52-tone RU, which is still lower by 6dBm than the maximum allowable effective isotropic radiated power (EIRP) of 30dBm.

When a PSD limitation is overcome, transmission power may be increased, thereby enhancing spectrum efficiency or extending a range.

Considering that a PSD limitation is defined per MHz for each STA, when the tones of a small RU are distributed on a wide bandwidth, tones for each STA are noncontiguous, so each tone may be transmitted with high power. A RU including tones distributed in this way is referred to as a distributed RU (DRU), and in order to distinguish from it, a RU including contiguous tones defined in an existing WLAN system (e.g., a system according to IEEE 802.11ax, 11be, etc.) may be referred to as a regular RU (RRU).

Compared to a STA transmitting an existing RRU, a STA transmitting a DRU may use high power. For example, a 52-tone DRU across 80MHz has only one tone per MHz, while for a 52-tone RRU, there are approximately 13 tones per MHz. When a PSD limitation of -1dBm/MHz is assumed in a 6GHz LPI band, for a 52-tone RU, transmission power may be increased by approximately 11dB when a DRU is used. When transmission power is increased in this way, higher MCS may be applied and a longer range may be supported.

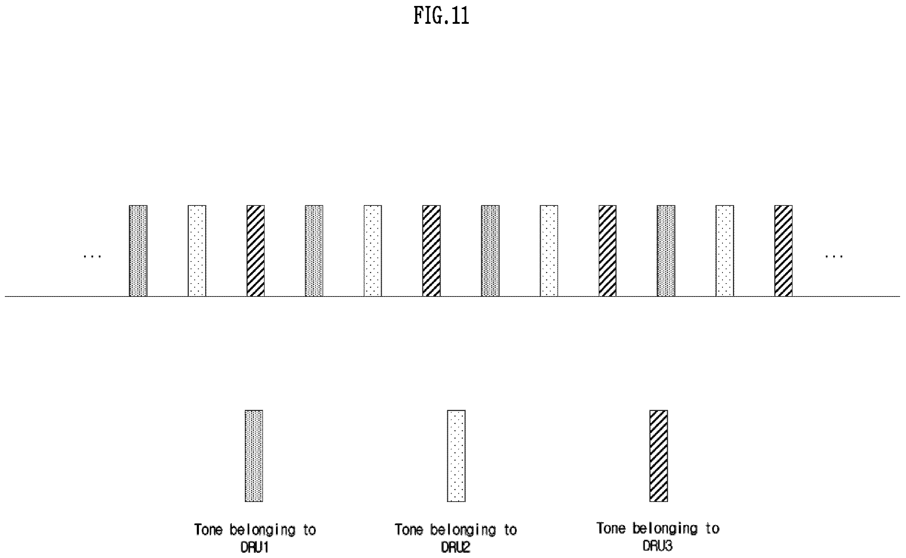

FIG. 11 is a diagram for describing examples of a DRU to which the present disclosure may be applied.

The example of FIG. 11 illustratively shows that STA1 performs transmission on DRU1, STA2 performs transmission on DRU2 and STA3 performs transmission on DRU3. Each STA may apply a transmission power boost by using a DRU. Compared to when a RRU in the same size is used, higher transmission power is applied to all tones in a DRU, and accordingly, spectral efficiency may be greatly improved. In this way, a DRU may be usefully applied particularly in UL-OFDMA.

In case of an AP, a DRU may also be utilized. In some cases, an AP may perform DL-OFDMA transmission to STA(s) by using only some of DRU1, DRU2 and DRU3, and in this case, a transmission power boost due to the use of a DRU may be applied.

In order to maximize a power boost, tones within one DRU may be distributed as far as possible. For example, a DRU including one tone per MHz may be considered an optimal example. The size of a DRU (or the number of available tones (i.e., the number of the remaining tones excluding unavailable tones such as a null tone, a guard tone, a DC tone, etc.) included in one DRU) may be defined to be the same as the size of a RRU (or the number of available tones included in one RRU). Accordingly, effects on various technologies defined previously based on a RRU may be minimized. A table below shows an example of an achievable power boost (in the unit of dB) for various DRUs distributed on a different bandwidth. The examples in a table below assume a 6GHz LPI band, and a power boost may also be obtained in a 2.4GHz band and a 5GHz band in other regions. For example, in 80MHz UL-OFDMA transmission by 8 users, when each user uses a 106-tone DRU, the overall performance may be enhanced by approximately 8.13dB compared to when each user uses a 106-tone RRU. In this way, a DRU may be used to overcome PSD limitations and obtain significant benefits.

**[Table 1]**

| | 20MHz Bandwidth | 40MHz Bandwidth | 80MHz Bandwidth |
|---|---|---|---|
| 26-tone RU | 8.13 | 11.14 | 11.14 |
| 52-tone RU | 6.37 | 8.13 | 11.14 |
| 106-tone RU | 3.56 | 6.37 | 8.13 |
| 242-tone RU | Not apply | 2.69 | 5.12 |
| 484-tone RU | Not apply | Not apply | 2.69 |

### Trigger Frame

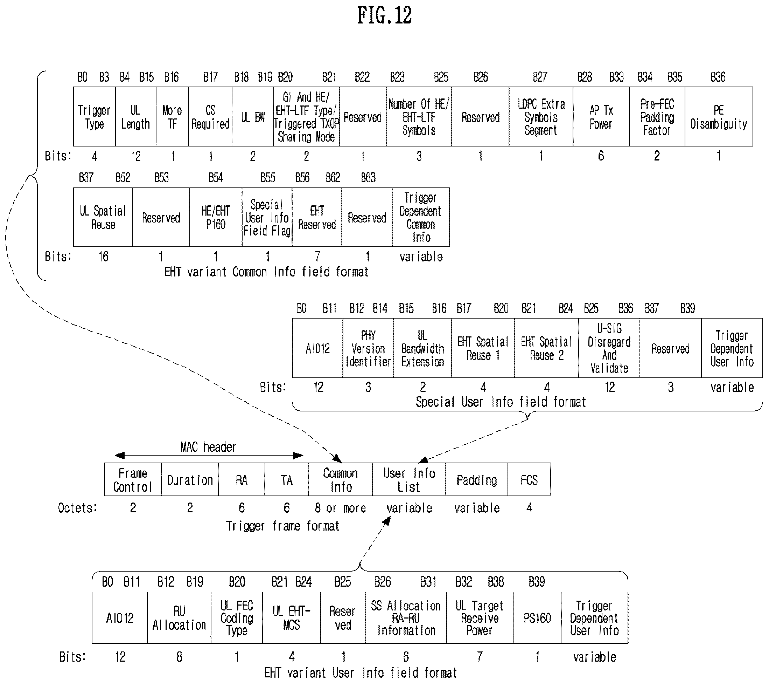

FIG. 12 is a diagram representing an illustrative format of a trigger frame to which the present disclosure may be applied.

A trigger frame may allocate a resource for at least one TB PPDU transmission and request TB PPDU transmission. A trigger frame may also include other information required by a STA which transmits a TB PPDU in response thereto. A trigger frame may include common information and a user information list field in a frame body.

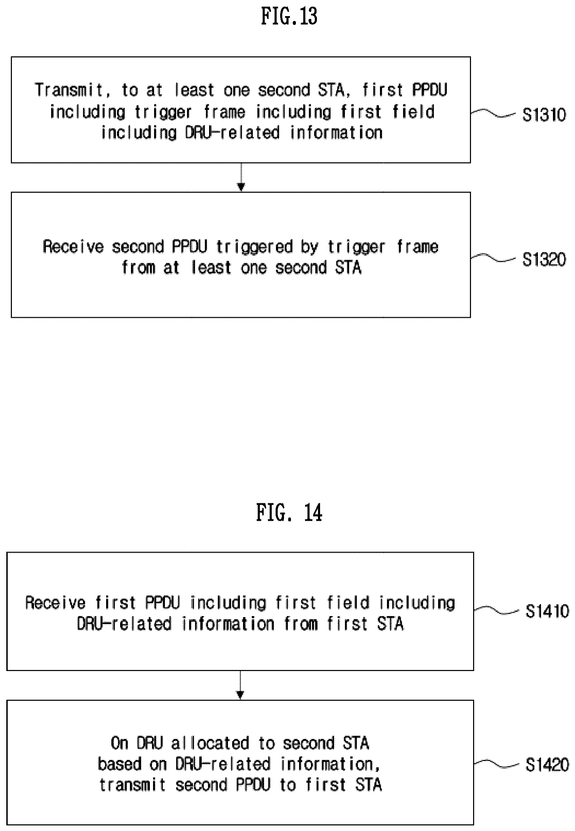

A common information field may include information commonly applied to at least one TB PPDU transmission requested by a trigger frame, e.g., a trigger type, a UL length, whether a subsequent trigger frame exists (e.g., More TF), whether channel sensing (CS) is required, a UL bandwidth (BW), etc. FIG. 14 illustratively shows a EHT variant common information field format.

A trigger type subfield in a 4-bit size may have a value from 0 to 15. Among them, a value of a trigger type subfield, 0, 1, 2, 3, 4, 5, 6 and 7, is defined as corresponding to basic, Beamforming Report Poll (BFRP), multi user-block acknowledgment request (MU-BAR), multi user-request to send (MU-RTS), Buffer Status Report Poll (BSRP), groupcast with retries (GCR) MU-BAR, Bandwidth Query Report Poll (BQRP) and NDP Feedback Report Poll (NFRP) and a value of 8-15 is defined as being reserved.

Among common information, a trigger dependent common information subfield may include information that is selectively included based on a trigger type.

A special user information field may be included in a trigger frame. A special user information field does not include user-specific information, but includes extended common information which is not provided in a common information field.

A user information list includes at least 0 user information field. FIG. 14 illustratively represents an EHT variant user information field format.

It represents that a AID12 subfield is basically a user information field for a STA having a corresponding AID. In addition, when a AID12 field has a predetermined specific value, it may be utilized for other purpose including allocating a random access (RA)-RU or being configured in a form of a special user information field. A special user information field is a user information field which does not include user-specific information but includes extended common information not provided in a common information field. For example, a special user information field may be identified by an AID12 value of 2007 and a special user information field flag subfield in a common information field may represent whether a special user information field is included.

A RU allocation subfield may represent a size and a position of a RU/a MRU. To this end, a RU allocation subfield may be interpreted with a PS160 (primary/secondary 160MHz) subfield of a user information field, a UL BW subfield of a common information field, etc.

For example, as in Table 2 below, mapping of B7-B1 of a RU allocation subfield may be defined along with a setting of a B0 and PS160 subfield of a RU allocation subfield. Table 2 shows an example of encoding of a PS160 subfield and a RU allocation subfield of a EHT variant user information field.

**[Table 2]**

| **PS160 subfield** | **B0 of the RU Allocation subfield** | **B7-B1 of the RU Allocation subfield** | **Bandwidth (MHz)** | **RU/MRU size** | **RU/MRU index** | **PHY RU/ MRU index** |
|---|---|---|---|---|---|---|
| 0-3: 80 MHz segment where the RU is located | | 0-8 | 20, 40, 80, 160, or 320 | 26 | RU1 to RU9, respectively | 37×*N*+RU index |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RU1 to RU4, respectively | 16×*N*+RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N*+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4×*N*+RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+RU index |
| | | 66 | 80, 160, or 320 | | RU2 | |
| | | 67 | 80, 160, or 320 | 996 | RU1 | *N+*RU index |
| 0-1: 160 MHz segment where the RU is located | 0 | 68 | Reserved | | | Reserved |
| | 1 | | 160 or 320 | 2×996 | RU1 | X1 + RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: 80 MHz segment where the RU is located | | 70-72 | 20, 40, 80, 160, or 320 | 52+26 | MRU1 to MRU3, respectively | 12×*N*+ MRU index |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×*N*+ MRU index |
| | | 84, 85 | 40, 80, 160, or 320 | 106+26 | MRU3 and MRU4, respectively | |
| | | 86-89 | 80, 160, or 320 | 106+26 | MRUS to MRU8, respectively | |
| | | 90-93 | 80, 160, or 320 | 484+242 | MRU1 to MRU4, respectively | 4×*N*+ MRU index |
| 0-1: 160 MHz segment where the MRU is located | 0 | 94. 95 | 160 or 320 | 996+484 | MRU1 and MRU2, respectively | 4×X1 + MRU index |
| | 1 | | | | MRU3 and MRU4, respectively | |
| 0-1: 160 MHz segment where the MRU is located | 0 | 96-99 | 160 or 320 | 996+484+ 242 | MRU1 to MRU4, respectively | 8×X1 + MRU index |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 1484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel and when that value is set as 1, it may represent that RU allocation is applied to a secondary 80MHz channel of primary 160MHz. It may represent that when B0 of a RU allocation subfield is set as 0, RU/MRU allocation is applied to lower 80MHz of secondary 160MHz and when that value is set as 1, RU allocation is applied to upper 80MHz of secondary 160MHz.

**In** a trigger frame RU allocation table of Table 1, parameter N may be calculated based on a formula of N=2*X1+X0. For a bandwidth equal to or less than 80MHz, a value of PS160, B0, X0 and X1 may be set as 0. For a 160MHz bandwidth and a 320MHz bandwidth, a value of PS160, B0, X0 and X1 may be set as in Table 2. This configuration represents absolute frequency order for primary and secondary 80MHz and 160MHz channels. Order from the left to the right represents order from a low frequency to a high frequency. A primary 80MHz channel is indicated as P80, a secondary 80MHz channel is indicated as S80 and a secondary 160MHz channel is indicated as S160.

**[Table 3]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| 320 | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### DRU-based Uplink Transmission

As described above, in order to support DRU-based transmission or reception, it is required to signal information related to a DRU.

In the present disclosure, various examples of indicating DRU-related information for a case in which a DRU is used for a trigger frame are described below.

As described above, a trigger frame may trigger uplink transmission from at least one STA. In other words, uplink transmissions from at least one STA may be triggered based on various information included in a trigger frame (e.g., a common information field/a special user information field including information commonly applied to at least one STA, and a user information field including information for each of at least one STA). The triggered uplink transmission may include UL-OFDMA transmission.

In the present disclosure, DRU-related information, i.e., information triggering DRU-based uplink transmission from at least one STA, may be included in a trigger frame. For example, DRU-related information (and puncturing-related information) may be indicated through at least one field within a trigger frame. For example, as described by referring to FIG. 12, a trigger frame considered in the present disclosure may include at least one of a UHR variant common information field, a UHR variant special user information field, or a UHR variant user information field. Such a trigger frame may be referred to as a UHR trigger frame. Although the examples of the present disclosure are described by assuming that DRU-related information (and puncturing-related information) is included in a UHR variant common information field/special user information field/user information field within a UHR trigger frame, the scope of the present disclosure is not limited by a name of UHR. For example, the format of the common information field/special user information field/user information field of a trigger frame to which the present disclosure is applied may be defined by adding at least one field to or excluding at least one field from the exemplary format of a EHT variant common information field/special user information field/user information field in the trigger frame of FIG. 12 described above, and in order to simply express this, it is described by using a name of UHR variant common information field/special user information field/user information field.

In addition, as described above, a RU allocation subfield may be included in the user information field of a trigger frame. Through a RU allocation subfield, the size and location of a Ru/a MRU may be indicated for each of at least one STA.

The existing RU allocation subfield is defined based on a RRU, and in the present disclosure, it is assumed that the same RU allocation subfield is also applied to a DRU as it is. In other words, a predetermined mapping relationship for a RRU and a DRU may be defined. In addition, a DRU tone plan may be predefined in various forms based on a bandwidth where distributed tones exist, the number of distributed tones, a gap (or an interval) between tones, etc. When it is indicated that a DRU is applied, the value of a RU allocation subfield may indicate (or be interpreted) which DRU tone plan is applied to channel(s) within a trigger-based (TB) PPDU bandwidth based on a predetermined mapping relationship. When it is indicated that a DRU is not applied, the value of a RU allocation subfield may indicate the existing RRU allocation. In this way, the existing RU allocation subfield may be utilized by additionally defining only information indicating whether a DRU is applied, without the need to separately define or change a RU allocation subfield for a case in which a RRU is applied and a case in which a DRU is applied.

FIG. 13 is a diagram for describing an example of the first STA's DRU-based PPDU reception method according to the present disclosure.

In S1310, the first STA may transmit a first PPDU including a trigger frame to at least one second STA. A trigger frame may include the first field, and the first field may include information related to a DRU.

For example, information related to a DRU may include at least one bitmap related to a DRU. Each of at least one bitmap may have a bit size corresponding to the maximum channel size to which a DRU may be applied. In addition, information related to a DRU may include information about the maximum channel size that may be applied by a DRU. For example, information indicating the maximum channel size may indicate one of at least one maximum channel candidate values.

For example, when the maximum channel size is 80MHz, if the bandwidth of the second PPDU (i.e., a TB PPDU) is less than or equal to 80MHz, the first field may include one bitmap, and if the bandwidth of the second PPDU is greater than 80MHz, the first field may include an independent (or different) bitmap for trigger-based transmission (or uplink transmission) on each channel corresponding to the maximum channel size. More specifically, when a PPDU bandwidth is 160MHz, the first field for trigger-based transmission on the first 80MHz channel may include the first bitmap, and the first field for trigger-based transmission on the second 80MHz channel may include the second bitmap. When a PPDU bandwidth is 320MHz, the first field for trigger-based transmission on the first 80MHz channel may include the first bitmap, the first field for trigger-based transmission on the second 80MHz channel may include the second bitmap, the first field for trigger-based transmission on the third 80MHz channel may include the third bitmap, and the first field for trigger-based transmission on the fourth 80MHz channel may include the fourth bitmap.

For example, bits included in each bitmap may correspond to a 20MHz channel within the maximum channel size. For example, the bit location of a bitmap may correspond to the physical/logical location of a 20MHz channel. When a bit value at any bit location is the first value (e.g., 1), it may indicate that a DRU is applied to a corresponding 20MHz channel, and when it is the second value (e.g., 0), it may indicate that a DRU is not applied to a corresponding 20MHz channel (i.e., a RRU is applied).

Additionally or alternatively, information related to a DRU may include 1 bit indicating whether a DRU is applied. Additionally or alternatively, information related to a DRU may include information indicating whether a DRU is applied within a 20MHz/40MHz/80MHz/160MHz/320MHz/480MHz/640MHz channel having a bit size according to the maximum channel size to which a DRU may be applied. Such DRU-related information may be included as information for each of at least one second STA or may be included as common information for at least one second STA.

Additionally or alternatively, the first field included in a trigger frame and/or the second field included in a trigger frame may include information indicating the maximum channel size to which a DRU may be applied and an actual DRU application channel size less than or equal to the maximum channel size.

Puncturing-related information may be further included in the first field. Based on puncturing-related information, a non-punctured channel and a punctured channel may be specified within the bandwidth of the second PPDU. Accordingly, various DRU tone plans may be applied to a channel to which a DRU is applied among the non-punctured channels. For example, a DRU tone plan of a channel size corresponding to the sum of the non-punctured channel sizes may be applied. Alternatively, a DRU tone plan of the first size corresponding to the size of the first contiguous channel among the non-punctured channels may be applied, and a DRU tone plan of the second size corresponding to the size of the second contiguous channel may be applied. A punctured channel may exist between the first contiguous channel and the second contiguous channel, or a punctured channel may not exist between the first contiguous channel and the second contiguous channel. In addition, a bit value at a bit location corresponding to a punctured channel (i.e., whether a DRU is applied) may be disregarded in a bitmap.

For example, the first field may correspond to a common information field, or the first field may correspond to a special user information field, or the first field may correspond to a field defined by a combination of information included in a common information field and information included in a special user information field. For example, the second field may be a user information field.

In S1320, the first STA may receive the second PPDU triggered by a trigger frame from at least one second STA.

A method described in the example of FIG. 13 may be performed by a first device 100 in FIG. 1. For example, at least one processor 102 of the first device 100 of FIG. 1 may be configured to transmit the first PPDU including a trigger frame including DRU-related information to at least one second STA and receive the second PPDU triggered by a trigger frame from at least one second STA. Furthermore, at least one memory 104 of a first device 100 may store instructions for performing a method described in the example of FIG. 13 or examples described below when executed by at least one processor 102.

FIG. 14 is a diagram for describing an example of the second STA's DRU-based PPDU transmission method according to the present disclosure.

In S1410, the second STA may receive a PPDU including a trigger frame including the first field from the first STA. The first field may include information related to a DRU.

The specific details of information related to a DRU and information related to a DRU included in the first field and/or the second field within a trigger frame are the same as described for the example of FIG. 13, so an overlapping description is omitted.

In S1420, the second STA may determine a DRU allocated to it based on information related to a DRU and transmit the second PPDU to the first STA on a corresponding DRU.

A method described in the example of FIG. 14 may be performed by a second device 200 in FIG. 1. For example, at least one processor 202 of the second device 200 of FIG. 1 may be configured to receive the first PPDU including a trigger frame including DRU-related information from the first STA and transmit the second PPDU to the first STA on a DRU allocated to the second STA. Furthermore, at least one memory 204 of a second device 200 may store instructions for performing a method described in the example of FIG. 14 or examples described below when executed by at least one processor 202.

The examples of FIGS. 13 and 14 may correspond to some of the various examples of the present disclosure. Hereinafter, various examples of the present disclosure including the example of FIGS. 13 and 14 will be described in more detail.

In embodiments described below, a common information field, a special user information field, and/or a user information field included in a trigger frame are described as a representative example of the present disclosure for a field including DRU-related information for TB PPDU transmission, but the scope of the present disclosure is not limited by a field name, and embodiments described below may also be applied equally to a field with other names.

### Embodiment 1

This embodiment relates to a method for indicating DRU-related information through a user information field within a trigger frame.

Whether a DRU is applied may be indicated by using a specific bit within a user information field. For example, 1 bit within a user information field may indicate that a RRU is applied when that value is 0, and may indicate that a DRU is applied when that value is 1.

For example, a subfield indicating whether a DRU is applied may be defined by using B25 corresponding to the reserved bit/subfield of an existing EHT variant user information field in a UHR variant user information field, or may be defined by using (some bits of) a trigger dependent user information subfield after B40.

Additionally or alternatively, whether a DRU is applied to a channel size may be indicated by using a number of bits determined according to the maximum channel size to which a DRU may be applied within a user information field. Such information may be defined by using, for example, a reserved bit/subfield (e.g., B25) within a user information field, and/or (some bits of) a trigger dependent user information subfield.

The maximum channel size may be a value predefined on a system (i.e., applied without separate signaling) or a value preconfigured through the capability information of a STA.

**In** the present disclosure, the maximum channel to which a DRU may be applied may mean a channel of the maximum size including distributed tones when tone indexes allocated to a specific DRU are distributed within a channel of a specific size. At least one DRU tone plan applied to a corresponding channel size may be separately defined.

For example, when the maximum channel size is 20MHz, 1 bit is used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated

For example, when the maximum channel size is 40MHz, 2 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Disregard or Validate

For example, when the maximum channel size is 80MHz, 2 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated

For example, when the maximum channel size is 160MHz, 3 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated
4: Apply a DRU within a 160MHz channel including 20MHz to which a corresponding STA is allocated
5-7: Disregard or Validate

For example, when the maximum channel size is 320MHz, 3 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated
4: Apply a DRU within a 160MHz channel including 20MHz to which a corresponding STA is allocated
5: Apply a DRU within a 320MHz channel including 20MHz to which a corresponding STA is allocated
6-7: Disregard or Validate

For example, when the maximum channel size is 480MHz, 3 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated
4: Apply a DRU within a 160MHz channel including 20MHz to which a corresponding STA is allocated
5: Apply a DRU within a 320MHz channel including 20MHz to which a corresponding STA is allocated
6: Apply a DRU within a 480MHz channel including 20MHz to which a corresponding STA is allocated
7: Disregard or Validate

For example, when the maximum channel size is 640MHz, 3 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated
4: Apply a DRU within a 160MHz channel including 20MHz to which a corresponding STA is allocated
5: Apply a DRU within a 320MHz channel including 20MHz to which a corresponding STA is allocated
6: Apply a DRU within a 640MHz channel including 20MHz to which a corresponding STA is allocated
7: Disregard or Validate

Alternatively, when the maximum channel size is 640MHz, 3 bits are used, and that value may indicate whether a DRU is applied to a channel size as follows.
0: Apply a RRU within a 20MHz channel to which a corresponding STA is allocated
1: Apply a DRU within a 20MHz channel to which a corresponding STA is allocated
2: Apply a DRU within a 40MHz channel including 20MHz to which a corresponding STA is allocated
3: Apply a DRU within a 80MHz channel including 20MHz to which a corresponding STA is allocated
4: Apply a DRU within a 160MHz channel including 20MHz to which a corresponding STA is allocated
5: Apply a DRU within a 320MHz channel including 20MHz to which a corresponding STA is allocated
6: Apply a DRU within a 480MHz channel including 20MHz to which a corresponding STA is allocated
7: Apply a DRU within a 640MHz channel including 20MHz to which a corresponding STA is allocated

A STA may identify a RRU index to which it is allocated based on a RU allocation field, and when a DRU is applied, may identify/interpret a DRU index mapped to an identified RRU index based on a predetermined mapping relationship between a RRU and a DRU. A STA may transmit a TB PPDU based on a DRU tone plan corresponding to an identified DRU index.

According to the above-described example, since whether a DRU is applied is indicated to each STA through a user information field, a method in which a DRU is applied only to a specific RU within one channel and a RRU is applied to other RUs may be supported. In terms of power gain, it may be configured to ensure that only DRUs for a plurality of STAs exist, not that a RRU for the first STA and a DRU for the second STA coexist within a certain range of channel. In this case, since redundant DRU-related information is provided to STAs, overhead may increase, but whether a DRU is applied may be flexibly configured for each STA.

### Embodiment 2

This embodiment relates to a method for indicating DRU-related information through a common information field and/or a special user information field within a trigger frame.

For example, 1 bit within a common information field (or a special user information field) may indicate that a RRU is applied when that value is 0, and may indicate that a DRU is applied when that value is 1. Such information may be defined by using, for example, the reserved subfield/bit of a common information field (e.g., B22, B26, B53, or B63 of a EHT variant common information field) or (some bits of) a trigger dependent common information subfield, or the reserved subfield/bit of a special user information field (e.g., B37, B38, or B39 of a EHT variant special user information field) or (some bits of) the trigger dependent user information subfield of a special user information field.

Additionally or alternatively, within a common information field and/or a special user information field, whether a DRU is applied to a channel size may be indicated by using a number of bits determined according to the maximum channel size to which a DRU may be applied. The maximum channel size may be a value predefined on a system (i.e., applied without separate signaling) or a value preconfigured through the capability information of a STA.

Unlike Embodiment 1 where whether a DRU is applied to a 20MHz channel to which a STA is allocated is indicated, Embodiment 2 may indicate whether a DRU is applied to a 20MHz channel to which a common information field and/or a special user information field is delivered/transmitted. In other words, according to an indication on whether a DRU is applied, which is included in a common information field and/or a special user information in a specific 20MHz channel among the channel(s) to which a trigger frame is transmitted in a downlink, a DRU may or may not be applied in TB PPDU transmission in the specific 20MHz channel in an uplink.

When the size of information indicating whether a DRU is applied according to the maximum channel size to which a DRU may be applied is 1 bit, a corresponding bit may be included in a common information field or a special user information field. When the size of information indicating whether a DRU is applied according to the maximum channel size to which a DRU may be applied is greater than or equal to 2 bits, all of the corresponding bits may be included in a common information field or a special user information field, or some of the corresponding bits may be included in a common information field and the remaining bits may be included in a special user information field, or corresponding information may be indicated by a combination of a common information field and a special user information field.

For example, when the maximum channel size is 20MHz, 1 bit is used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted

For example, when the maximum channel size is 40MHz, 2 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Disregard or Validate

For example, when the maximum channel size is 80MHz, 2 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted

For example, when the maximum channel size is 160MHz, 3 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted
4: Apply a DRU within a 160MHz channel including 20MHz where a corresponding common information field (and/or special user information field) is transmitted
5-7: Disregard or Validate

For example, when the maximum channel size is 320MHz, 3 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted
4: Apply a DRU within a 160MHz channel including 20MHz where a corresponding common information field (and/or special user information field) is transmitted
5: Apply a DRU within a 320MHz channel including 20MHz where a corresponding common information field (and/or special user information field) is transmitted
6-7: Disregard or Validate

For example, when the maximum channel size is 480MHz, 3 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted
4: Apply a DRU within a 160MHz channel including 20MHz where a corresponding common information field (and/or special user information field) is transmitted
5: Apply a DRU within a 320MHz channel including 20MHz where a corresponding common information field (and/or special user information field) is transmitted
6: Apply a DRU within a 480MHz channel including 20MHz where a corresponding common information field (and/or special user information field) is transmitted
7: Disregard or Validate

For example, when the maximum channel size is 640MHz, 3 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted
4: Apply a DRU within a 160MHz channel including 20MHz where a corresponding common information field (and/or special user information field) is transmitted
5: Apply a DRU within a 320MHz channel including 20MHz where a corresponding common information field (and/or special user information field) is transmitted
6: Apply a DRU within a 640MHz channel including 20MHz where a corresponding common information field (and/or special user information field) is transmitted
7: Disregard or Validate

Alternatively, when the maximum channel size is 640MHz, 3 bits are used, and that value may indicate whether a DRU is applied to a channel size as follows.
0: Apply a RRU within a 20MHz channel where a corresponding common information field (and/or special user information field) is transmitted
1: Apply a DRU within a 20MHz channel where a corresponding common information field (and/or special user information field) is transmitted
2: Apply a DRU within a 40MHz channel including 20MHz where a corresponding common information field (and/or special user information field) is transmitted
3: Apply a DRU within a 80MHz channel including 20MHz where a corresponding common information field (and/or special user information field) is transmitted
4: Apply a DRU within a 160MHz channel including 20MHz where a corresponding common information field (and/or special user information field) is transmitted
5: Apply a DRU within a 320MHz channel including 20MHz where a corresponding common information field (and/or special user information field) is transmitted
6: Apply a DRU within a 480MHz channel including 20MHz where a corresponding common information field (and/or special user information field) is transmitted
7: Apply a DRU within a 640MHz channel including 20MHz where a corresponding common information field (and/or special user information field) is transmitted

**In** this way, compared to Embodiment 1 that uses a user information field, signaling overhead may be reduced according to Embodiment 2 that uses a common information field and/or a special user information field applied in the unit of 20MHz, not each RU/MRU. Meanwhile, when whether a DRU is applied is indicated in the unit of 20MHz through a common information field and/or a special user information field, a RRU and a DRU may not coexist within at least a 20MHz channel, and only RRUs for a plurality of STAs may exist or only DRUs for a plurality of STAs may exist. In this case, power gain may be maximized by using DRUs including tones evenly distributed within one channel. For example, it may be configured to ensure that a RRU and a DRU do not coexist within at least one 20MHz channel.

### Embodiment 3

This embodiment relates to a method for indicating a channel to which a DRU is applied based on a bitmap through a common information field and/or a special user information field within a trigger frame.

For example, whether a DRU is applied may be indicated by using a bitmap method for each channel (e.g., 20MHz channel) within a TB PPDU bandwidth. A corresponding relationship between a bit location in a bitmap and a 20MHz channel may be defined based on the physical or logical location of a 20MHz channel. For example, it may be mapped respectively in order of physical locations from the least significant bit (LSB) to the most significant bit (MSB) in a bitmap (or from MSB to LSB) or from the low 20MHz channel to the high 20MHz channel in a frequency domain. Alternatively, it may be mapped from LSB to MSB in a bitmap (or from MSB to LSB) or in order of logical locations such as a primary 20MHz channel, a secondary 20MHz channel, etc.

When a bit value at a corresponding bit location is the first value (e.g., 1), it may indicate that a DRU is applied to a corresponding 20MHz channel, and when it is the second value (e.g., 0), it may indicate that a DRU is not applied to a corresponding 20MHz channel (i.e., a RRU is applied).

The size of a bitmap may be defined according to a TB PPDU bandwidth. For example, when the bandwidth of a TB PPDU is 20/40/80/160/320/480/640MHz, a bitmap with a length of 1/2/4/8/16/24/32 bits may be defined, respectively.

When the size of a bitmap is 1 bit, a corresponding bit may be included in a common information field or a special user information field. When a bitmap size is greater than or equal to 2 bits, all of the corresponding bits may be included in a common information field or a special user information field, or some of the corresponding bits may be included in a common information field and the remaining bits may be included in a special user information field, or corresponding information may be indicated by a combination of a common information field and a special user information field.

Additionally or alternatively, the size of a bitmap may be defined based on the maximum channel size to which a DRU may be applied. For example, when the maximum channel size is 320MHz, a bitmap size may be fixed to 16 bits. For example, when the maximum channel size is 80MHz, a bitmap size may be fixed to 4 bits.

When it is indicated that a DRU is applied to contiguous channels, a DRU tone plan defined as a channel size corresponding to the total size of contiguous channels may be applied. If the maximum channel size to which a DRU may be applied is fixed and the maximum channel size is smaller than the total size of contiguous channels, a DRU tone plan defined as a channel size less than or equal to the maximum channel size may be applied. For example, for a TB PPDU with a bandwidth of 320MHz, when the value of a bitmap included in a trigger frame is 1111111100000000, it may be indicated that a DRU is applied to a low 160MHz channel (or a primary 160MHz channel) and a DRU is not applied (i.e., a RRU is applied) to a high 160MHz channel (or a secondary 160MHz channel). Here, when the maximum channel size to which a DRU may be applied is 80MHz, a DRU tone plan defined for a 80MHz channel size may be applied to the lowest 80MHz channel (or a primary 80MHz channel), and a DRU tone plan defined for a 80MHz channel size may be applied to the second lowest 80MHz channel (or a secondary 80MHz channel).

Information about the maximum channel size to which a DRU may be applied is defined as follows, and may be indicated through a common information field and/or a special user information field within a trigger frame. A value indicated by information about the maximum channel size to which a DRU may be applied may be the basis of the size of a bitmap as described above.

**In** order to distinguish from the maximum channel size (hereinafter, "the maximum channel size to which a predefined/preconfigured DRU may be applied) to which a DRU may be applied which is predefined on a system (i.e., applied without separate signaling) / preconfigured through the capability information of a STA, which is described in other examples of the present disclosure, a value indicated by information about the maximum channel size to which a DRU described in this embodiment may be applied is referred to as "the maximum channel size to which a dynamically indicated DRU may be applied" for a corresponding PPDU.

Accordingly, information indicating the maximum channel size to which a dynamically indicated DRU may be applied may indicate one of the candidates of at least one maximum channel size that is predetermined according to the maximum channel size to which a predefined/preconfigured DRU may be applied.

When the size of information indicating the maximum channel size to which a dynamically indicated DRU may be applied is 1 bit, a corresponding bit may be included in a common information field or a special user information field. When the size of information indicating the maximum channel size to which a dynamically indicated DRU may be applied is greater than or equal to 2 bits, all of the corresponding bits may be included in a common information field or a special user information field, or some of the corresponding bits may be included in a common information field and the remaining bits may be included in a special user information field, or corresponding information may be indicated by a combination of a common information field and a special user information field.

For example, when the maximum channel size to which a predefined/preconfigured DRU may be applied is 20MHz, 1 bit is used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

For example, when the maximum channel size to which a predefined/preconfigured DRU may be applied is 40MHz, 2 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: Disregard or Validate

For example, when the maximum channel size to which a predefined/preconfigured DRU may be applied is 80MHz, 2 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

For example, when the maximum channel size to which a predefined/preconfigured DRU may be applied is 160MHz, 3 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

4: The maximum channel size to which a dynamically indicated DRU may be applied is 160MHz.

5-7: Disregard or Validate

For example, when the maximum channel size to which a predefined/preconfigured DRU may be applied is 320MHz, 3 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

4: The maximum channel size to which a dynamically indicated DRU may be applied is 160MHz.

5: The maximum channel size to which a dynamically indicated DRU may be applied is 320MHz.

6-7: Disregard or Validate
For example, when the maximum channel size to which a predefined/preconfigured DRU may be applied is 480MHz, 3 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

4: The maximum channel size to which a dynamically indicated DRU may be applied is 160MHz.

5: The maximum channel size to which a dynamically indicated DRU may be applied is 320MHz.

6: The maximum channel size to which a dynamically indicated DRU may be applied is 480MHz.

7: Disregard or Validate
For example, when the maximum channel size to which a predefined/preconfigured DRU may be applied is 640MHz, 3 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

4: The maximum channel size to which a dynamically indicated DRU may be applied is 160MHz.

5: The maximum channel size to which a dynamically indicated DRU may be applied is 320MHz.

6: The maximum channel size to which a dynamically indicated DRU may be applied is 640MHz.

7: Disregard or Validate
Alternatively, when the maximum channel size to which a predefined/preconfigured DRU may be applied is 640MHz, 3 bits are used, and that value may indicate the maximum channel size to which a dynamically indicated DRU may be applied to a corresponding PPDU as follows.

0: Always apply a RRU only
1: The maximum channel size to which a dynamically indicated DRU may be applied is 20MHz.

2: The maximum channel size to which a dynamically indicated DRU may be applied is 40MHz.

3: The maximum channel size to which a dynamically indicated DRU may be applied is 80MHz.

4: The maximum channel size to which a dynamically indicated DRU may be applied is 160MHz.

5: The maximum channel size to which a dynamically indicated DRU may be applied is 320MHz.

6: The maximum channel size to which a dynamically indicated DRU may be applied is 480MHz.

7: The maximum channel size to which a dynamically indicated DRU may be applied is 640MHz.

When information indicating the maximum channel size to which a dynamically indicated DRU may be applied indicates 0 (i.e., only a RRU is always applied), indication information (e.g., 1-bit information) about whether a DRU is applied, which is described in the above-described Embodiment 2 may not be included in a common information field and/or a special user information field.

Alternatively, when the maximum channel size to which a predefined/preconfigured DRU may be applied is applied as it is for a corresponding PPDU, information indicating the maximum channel size to which a dynamically indicated DRU may be applied may not be defined or may not be included in a common information field and/or a special user information field.

In an example of indicating information related to a DRU through the common information field and/or the special user information field of a trigger frame, corresponding information is included only once (i.e., without repetition) per 20MHz, so overhead may be reduced compared to the examples of Embodiments 1 and 2.

### Embodiment 3-2

According to Embodiment 2-1, as the bandwidth of a TB PPDU and/or the maximum channel size to which a DRU may be applied increases, the number of bits required to indicate information related to a DRU within the common information field and/or special user information field of a trigger frame may increase.

In order to additionally reduce a bit size within a common information field and/or a special user information field required to indicate information related to a DRU, a TB PPDU bandwidth may be divided into units of a predetermined size, and a bitmap may be applied per unit of a predetermined size. The unit of a predetermined size may correspond to, for example, a channel size of 80MHz or 160MHz. A bitmap may indicate whether a DRU is applied, for example, in the unit of 20MHz.

For example, for a trigger frame including DRU-related information for the TB PPDU of a 320MHz bandwidth, a 16-bit subfield may be defined for a bitmap indication according to the method of Embodiment 2-1, and a corresponding bitmap subfield may be set as the same value in 16 20MHz channels. According to this embodiment, when the unit of a predetermined size is 80MHz, a 4 bit-sized subfield may be defined for a bitmap indication through a trigger frame, a corresponding bitmap subfield may be set as the same value in 4 20MHz channels within one 80MHz unit and a bitmap subfield may be set as a different (or independent) value in different 80MHz units. For example, when the unit of a predetermined size is 160MHz, a 8 bit-sized subfield may be defined and used for a bitmap indication through a trigger frame. A corresponding bitmap subfield may be set as the same value in 8 20MHz channels within one 160MHz unit, and a bitmap subfield may be set as a different (or independent) value in different 160MHz units.

For a TB PPDU with a bandwidth smaller than the unit of a predetermined size (e.g., a 80MHz or 160MHz unit) (e.g., a TB PPDU with a 20MHz or 40MHz bandwidth), a bitmap included in a trigger frame may also be defined as a 1-bit or 2-bit size corresponding to the bandwidth of a TB PPDU. For a TB PPDU with a bandwidth smaller than the unit of a predetermined size (e.g., a 160MHz unit) (e.g., a TB PPDU with a 20MHz or 40MHz or 80MHz bandwidth), a bitmap included in a trigger frame may also be defined as a 1-bit or 2-bit or 4-bit size corresponding to the bandwidth of a TB PPDU.

Alternatively, for a TB PPDU with a bandwidth smaller than the unit of a predetermined size (e.g., a 80MHz or 160MHz unit) (e.g., a TB PPDU with a 20MHz or 40MHz bandwidth), a bitmap in a trigger frame may also be defined as a 4-bit or 8-bit size corresponding to the unit of a 80MHz or 160MHz size. In this case, for a TB PPDU with a 20MHz bandwidth, one bit corresponding to the LSB (or MSB) within a bitmap included in a trigger frame may indicate whether a DRU is applied, and all remaining bits may be set as a predefined value (e.g., 0 or 1). For a TB PPDU with a 40MHz bandwidth, two bits on the LSB (or MSB) within a bitmap included in a trigger frame may indicate whether a DRU is applied, and all remaining bits may be set as a predefined value (e.g., 0 or 1).

As an additional example, for a TB PPDU with a bandwidth smaller than the unit of a predetermined size (e.g., a 160MHz unit) (e.g., a TB PPDU with a 20MHz or 40MHz or 80MHz bandwidth), a bitmap within a trigger frame may also be defined as a 8-bit size corresponding to the unit of a 160MHz size. In this case, for a TB PPDU with a 20/40/80MHz bandwidth, 1/2/4 bits corresponding to the LSB (or MSB) within a bitmap included in a trigger frame may indicate whether a DRU is applied, and all remaining bits may be set as a predefined value (e.g., 0 or 1).

In examples described above, the unit of a predetermined size may be based on the maximum channel size to which a DRU may be applied. For example, the unit of a predetermined size may have the same size as the maximum channel size to which a DRU may be applied. Accordingly, one bitmap included in a trigger frame may have a bit size corresponding to the maximum channel size to which a DRU may be applied to a TB PPDU. For example, according to the size of a TB PPDU bandwidth, a common information field and/or a special user information field transmitted through a trigger frame in the first channel corresponding to the maximum channel size may include the same first bitmap, a common information field and/or a special user information field transmitted through a trigger frame in the second channel corresponding to the maximum channel size may include the same second bitmap, ..., and a common information field and/or a special user information field transmitted through a trigger frame in the N-th channel corresponding to the maximum channel size may include the same N-th bitmap.

For 20MHz channels to which a DRU is applied contiguously, the DRU tone plan of a channel size corresponding to the total (or sum) size of contiguous channels may be applied, thereby additionally reducing overhead. Here, when the total (or sum) size of contiguous channels is greater than the maximum channel size to which a DRU may be applied, the DRU tone plan of a channel size corresponding to the maximum channel size may be applied. For example, when the number of 20MHz channels to which a DRU is applied contiguously is 8 (i.e., when the application of a DRU is indicated for contiguous 160MHz), and when the maximum channel size to which a DRU may be applied is 80MHz, a DRU tone plan corresponding to a 80MHz channel size may be applied to each of two 80MHz channels within corresponding 160MHz.

Alternatively, when the DRU tone plan of a channel size corresponding to the total size of 20MHz channels to which a DRU is applied contiguously is not applied, information about the maximum channel size to which a DRU may be applied (or the maximum channel size to which a dynamically indicated DRU may be applied) which is described in Embodiment 2-1 may be additionally defined and used.

### Embodiment 4

This embodiment relates to a DRU application method based on puncturing-related information.

The puncturing-related information (or information about a puncturing pattern) or information about unused 20MHz channel(s) may be included in a common information field within a trigger frame, or may be included in a special user information field within a trigger frame, or some of the corresponding information may be included in a common information field and the remaining may be included in a special user information field, or the corresponding information may be indicated by a combination of a common information field and a special user information field.

On all channels where puncturing-related information is transmitted through a trigger frame, the value of puncturing-related information may be set as the same value.

For example, for an indication for puncturing-related information, similar to the non-OFDMA of a EHT MU PPDU, a method may be applied in which at least one puncturing pattern candidate is mapped to specific values in advance for each of the bandwidth candidates which may be applied to a TB PPDU and one specific value is indicated.

As another example, an indication for puncturing-related information may be mapped to a bit location within a bitmap from the lowest 20MHz to the highest 20MHz of the entire bandwidth in a bitmap manner, and may indicate whether puncturing is applied to a corresponding 20MHz channel through a bit value at a specific bit location (e.g., a value of 0 indicates that puncturing is applied, and a value of 1 indicates that puncturing is not applied).

Additionally or alternatively, since a puncturing pattern bitmap size increases as the bandwidth size of a TB PPDU increases, a TB PPDU bandwidth may be divided into units of a predetermined size, and a puncturing pattern bitmap may be applied per unit of a predetermined size. The unit of a predetermined size may correspond to, for example, a channel size of 80MHz or 160MHz. Here, a predetermined size associated with the size of a puncturing pattern bitmap may be the same as or different from a predetermined size associated with the size of a bitmap indicating whether a DRU is applied. A puncturing pattern bitmap may indicate whether puncturing is performed in the unit of 20MHz.

When puncturing is not applied, a DRU tone plan corresponding to, for example, a channel size of 20 / 40 / 80 / 160 / 320 / 480 / 640MHz may be defined, and a DRU tone plan corresponding to a specific channel size may be defined for a wide bandwidth. In addition, a DRU tone plan that may be applied when a specific channel is punctured within a specific bandwidth may be defined. For example, when a specific 20MHz channel is punctured within a 80MHz bandwidth, a DRU tone plan corresponding to a 60MHz channel size may be defined. For example, when a specific 20/40MHz channel is punctured within a 160MHz bandwidth, a DRU tone plan corresponding to a 140/120MHz channel size may be defined. For example, when a specific 40/80/120MHz channel is punctured within a 320MHz bandwidth, a DRU tone plan corresponding to a 280/240/200MHz channel size may be defined. In addition, when puncturing is applied to some channels for a wide bandwidth, a DRU tone plan corresponding to the remaining channel sizes may be defined.

As described above, puncturing-related information (or information about a puncturing pattern) may be indicated through a common information field and/or a special user information field within a trigger frame. In addition, an indication for a channel to which a DRU tone plan is applied may be included in a user information field within a trigger frame, or a common information field and/or a special user information field within a trigger frame. Accordingly, a STA receiving a PPDU may interpret for which size of channel that a DRU tone plan is actually applied.

For example, in examples described above, it may be indicated that a DRU is applied within a 80MHz channel including a specific 20MHz channel (e.g., a specific 20MHz channel may correspond to a 20MHz channel to which a corresponding STA is allocated in a user information field within a trigger frame, or may correspond to a 20MHz channel to which a common information field and/or a special user information field is transmitted). In addition, it may be indicated that some 20MHz channels are punctured within a corresponding 80MHz channel. Accordingly, for the remaining 60MHz channels excluding a punctured 20MHz channel, a DRU tone plan defined for a 60MHz channel size (e.g., a DRU tone plan defining a tone location distributed in the remaining 60MHz excluding some 20MHz when the entire bandwidth is 80MHz) may be applied.

Additionally or alternatively, whether a DRU tone plan is applied may be indicated through the first bitmap of a length corresponding to the unit of a predetermined size (e.g., the maximum channel size), and a puncturing pattern may be indicated through the second bitmap of a length corresponding to the unit of a predetermined size. In this case, the application of various DRU tone plans may be indicated/interpreted according to the location of a 20MHz channel where puncturing is indicated.

For example, it is assumed that the value of the first bitmap of a 4-bit size for a 80MHz size unit indicating whether a DRU is applied is 1111 and the value of the second bitmap of a 4-bit size for a 80MHz size unit indicating a puncturing pattern is 1101. In this case, through the first bitmap, it may be indicated that the DRU tone plan of a 80MHz channel size (e.g., a DRU tone plan defining a tone location distributed across the entire 80MHz when the entire bandwidth is 80MHz) is applied to a TB PPDU. In addition, it may be indicated through the second bitmap that the third 20MHz channel is punctured for a TB PPDU. Accordingly, it may be interpreted that a DRU tone plan of a channel size corresponding to 60MHz which is the size of the remaining non-punctured channels (e.g., a DRU tone plan defining a tone location distributed in the remaining 60MHz excluding some 20MHz when the entire bandwidth is 80MHz) is applied to a TB PPDU.

As another example, it is assumed that the value of the bitmap of a 4-bit size for a 80MHz size unit is 1101 and the value of the second bitmap of a 4-bit size for a 80MHz size unit indicating a puncturing pattern is 1101. In this case, through the first bitmap, the DRU tone plan of a 40MHz channel size (e.g., a DRU tone plan defining a tone location distributed in some 40MHz when the entire bandwidth is 80MHz) may be indicated for low 40MHz, a RRU tone plan (e.g., a RRU tone plan defined as a contiguous available tone in some 20MHz when the entire bandwidth is 80MHz) may be indicated in the third 20MHz channel, and it may be indicated that a DRU tone plan (e.g., a DRU tone plan defining a tone location distributed in some 20MHz when the entire bandwidth is 80MHz) is applied to a TB PPDU in the last 20MHz channel. In addition, it may be indicated through the second bitmap that the third 20MHz channel is punctured for a TB PPDU. Accordingly, it may be interpreted that RRU tone plan application to the third 20MHz channel is disregarded, the DRU tone plan of a 40MHz channel size is applied to a low 40MHz channel, and the DRU tone plan of a 20MHz channel size is applied to the last 20MHz channel.

In this way, indication information about whether a DRU is applied to the remaining channels excluding a channel punctured within the channel of a predetermined size may be set as a value indicating whether a DRU is applied to the entire channel without considering puncturing. Through indication information about a puncturing pattern and an indication for whether a DRU is applied, which is provided through a trigger frame, a STA receiving a PPDU may interpret/determine a channel location to which a DRU tone plan of which channel size is applied within the channel of a predetermined size.

Unlike the existing WLAN system where only a RRU is applied, when the application of a DRU is supported, the transmission and reception of a TB PPDU based on a DRU may be supported and signaling efficiency through a trigger frame may be increased by using methods for signaling information related to a DRU for the specific channel of a TB PPDU according to the present disclosure through a trigger frame.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
transmitting, to at least one second STA, a first physical layer protocol data unit (PPDU) including a trigger frame, wherein the trigger frame includes a first field including at least one bitmap related to a distributed resource unit (DRU); and
receiving a second PPDU triggered by the trigger frame from the at least one second STA,
wherein each of the at least one bitmap has a bit size corresponding to a maximum channel size to which the DRU is applicable to the second PPDU.

2. The method of Claim 1, wherein based on the maximum channel size being 80MHz:
for the second PPDU where a bandwidth is less than or equal to the 80MHz, the first field includes one bitmap, and
for the second PPDU where the bandwidth is greater than the 80MHz, the first field for a trigger-based transmission on a first 80MHz channel includes a first bitmap, and the first field for a trigger-based transmission on a second 80MHz channel includes a second bitmap.

3. The method of Claim 2, wherein:
for the second PPDU where the bandwidth is 320MHz, the first field for the trigger-based transmission on the first 80MHz channel includes the first bitmap, the first field for the trigger-based transmission on the second 80MHz channel includes the second bitmap, the first field for a trigger-based transmission on a third 80MHz channel includes a third bitmap, and the first field for a trigger-based transmission on a fourth 80MHz channel includes a fourth bitmap;
for the second PPDU where the bandwidth is 480MHz, the first field for the trigger-based transmission on the first 80MHz channel includes the first bitmap, the first field for the trigger-based transmission on the second 80MHz channel includes the second bitmap, the first field for the trigger-based transmission on the third 80MHz channel includes the third bitmap, the first field for the trigger-based transmission on the fourth 80MHz channel includes the fourth bitmap, the first field for a trigger-based transmission on a fifth 80MHz channel includes a fifth bitmap, and the first field for a trigger-based transmission on a sixth 80MHz channel includes a sixth bitmap; and
for the second PPDU where the bandwidth is 640MHz, the first field for the trigger-based transmission on the first 80MHz channel includes the first bitmap, the first field for the trigger-based transmission on the second 80MHz channel includes the second bitmap, the first field for the trigger-based transmission on the third 80MHz channel includes the third bitmap, the first field for the trigger-based transmission on the fourth 80MHz channel includes the fourth bitmap, the first field for the trigger-based transmission on the fifth 80MHz channel includes the fifth bitmap, the first field for the trigger-based transmission on the sixth 80MHz channel includes the sixth bitmap, the first field for a trigger-based transmission on a seventh 80MHz channel includes a seventh bitmap, and the first field for a trigger-based transmission on an eighth 80MHz channel includes an eighth bitmap.

4. The method of Claim 1, wherein:
in the each of the at least one bitmap, a bit location corresponds to a location of a 20MHZ channel within the maximum channel size.

5. The method of Claim 4, wherein:
for a bit at each bit location, a first bit value indicates that the DRU is applied, and a second bit value indicates that the DRU is not applied.

6. The method of Claim 1, wherein:
the first field or the second field included in the trigger frame further includes information indicating the maximum channel size.

7. The method of Claim 6, wherein:
the information indicating the maximum channel size indicates one of candidates of at least one maximum channel size.

8. The method of Claim 1, wherein:
the first field includes puncturing-related information.

9. The method of Claim 8, wherein:
a DRU tone plan of a channel size corresponding to a sum of sizes of a channel not punctured based on the puncturing-related information is applied.

10. The method of Claim 8, wherein:
among channels not punctured based on the puncturing-related information, a DRU tone plan of a first channel size corresponding to a size of a first contiguous channel is applied.

11. The method of Claim 10, wherein:
among the non-punctured channels, a DRU tone plan of a second channel size corresponding to a size of a second contiguous channel is applied.

12. The method of Claim 8, wherein:
in the each of the at least one bitmap, a bit value at a bit location corresponding to a punctured channel is disregarded.

13. The method of Claim 8, wherein the puncturing-related information:
indicates one puncturing pattern among at least one puncturing pattern candidate applied to a bandwidth of the second PPDU, or
indicates whether a puncturing is performed on each 20MHz channel within the bitmap through a bitmap of a size corresponding to a predetermined unit or the bandwidth of the second PPDU.

14. The method of Claim 6, wherein:
the first field is one of a common information field or a special user field, or the first field is a field corresponding to a combination of information included in the common information field and information included in the special user field, and
the second field is a user field.

15. The method of Claim 1, wherein:
the DRU includes tones distributed at a predetermined gap among available tones, and
tones included in a first DRU are located at a gap between tones included in a second DRU.

16. A first station (STA) device in a wireless local area network (WLAN) system, the device comprising:
at least one transceiver; and
at least one processor connected to the at least one transceiver,
wherein the at least one processor is configured to:
transmit, through the at least one transceiver, to at least one second STA, a first physical layer protocol data unit (PPDU) including a trigger frame, wherein the trigger frame includes a first field including at least one bitmap related to a distributed resource unit (DRU); and
receive, through the at least one transceiver, a second PPDU triggered by the trigger frame from the at least one second STA,
wherein each of the at least one bitmap has a bit size corresponding to a maximum channel size to which the DRU is applicable to the second PPDU.

17. A method performed by a second station (STA) in a wireless local area network (WLAN) system, the method comprising:
receiving, from a first STA, a first physical layer protocol data unit (PPDU) including a trigger frame, wherein the trigger frame includes a first field including at least one bitmap related to a distributed resource unit (DRU); and
on a DRU allocated to the second STA based on the at least one bitmap, transmitting a second PPDU triggered by the trigger frame to the first STA,
wherein each of the at least one bitmap has a bit size corresponding to a maximum channel size to which the DRU is applicable to the second PPDU.

18. A second station (STA) device in a wireless local area network (WLAN) system, the device comprising:
at least one transceiver; and
at least one processor connected to the at least one transceiver,
wherein the at least one processor is configured to:
receive, through the at least one transceiver, from a first STA, a first physical layer protocol data unit (PPDU) including a trigger frame, wherein the trigger frame includes a first field including at least one bitmap related to a distributed resource unit (DRU); and
on a DRU allocated to the second STA based on the at least one bitmap, transmit, through the at least one transceiver, a second PPDU triggered by the trigger frame to the first STA,
wherein each of the at least one bitmap has a bit size corresponding to a maximum channel size to which the DRU is applicable to the second PPDU.

19. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one of Claim 1 to Claim 13.

20. At least one non-transitory computer-readable medium storing at least one instruction, wherein:
the at least one instruction controls a device to perform a method according to any one of Claim 1 to Claim 13 in a wireless local area network (WLAN) system by being executed by at least one processor.
